(19) Europäisches Patentamt
European Patent Office
Office européen des brevets

(11) **EP 3 360 530 B1**

(12) **EUROPEAN PATENT SPECIFICATION**

(45) Date of publication and mention
of the grant of the patent:
**12.02.2020 Bulletin 2020/07**

(51) Int Cl.:
*A61J 1/05* *(2006.01)*  *B32B 27/32* *(2006.01)*
*B32B 27/34* *(2006.01)*  *B65D 81/24* *(2006.01)*
*C08G 69/00* *(2006.01)*  *G01N 1/10* *(2006.01)*
*B32B 1/08* *(2006.01)*  *B32B 7/12* *(2006.01)*
*B32B 27/08* *(2006.01)*

(21) Application number: **16853510.2**

(22) Date of filing: **03.10.2016**

(86) International application number:
**PCT/JP2016/079229**

(87) International publication number:
**WO 2017/061356 (13.04.2017 Gazette 2017/15)**

(54) **MULTILAYER CONTAINER FOR MEDICAL USE AND METHOD FOR PRODUCING MULTILAYER CONTAINER FOR MEDICAL USE**

MEHRSCHICHTIGER BEHÄLTER ZUR MEDIZINISCHEN VERWENDUNG UND VERFAHREN ZUR HERSTELLUNG EINES MEHRSCHICHTIGEN BEHÄLTERS ZUR MEDIZINISCHE VERWENDUNG

RÉCIPIENT MULTICOUCHE À USAGE MÉDICAL, ET PROCÉDÉ DE PRODUCTION DE RÉCIPIENT MULTICOUCHE À USAGE MÉDICAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2015 JP 2015200876**
**29.01.2016 JP 2016015435**

(43) Date of publication of application:
**15.08.2018 Bulletin 2018/33**

(73) Proprietor: **Mitsubishi Gas Chemical Company, Inc.**
**Tokyo 100-8324 (JP)**

(72) Inventors:
• **ARAKAWA, Shota**
**Hiratsuka-shi**
**Kanagawa 254-0016 (JP)**
• **NAITO, Toshiya**
**Hiratsuka-shi**
**Kanagawa 254-0016 (JP)**

(74) Representative: **Hoffmann Eitle**
**Patent- und Rechtsanwälte PartmbB**
**Arabellastraße 30**
**81925 München (DE)**

(56) References cited:
JP-A- S 646 056       JP-A- S 646 056
JP-A- 2004 229 750    JP-A- 2008 120 076
JP-A- 2011 037 498    JP-A- 2012 201 412
JP-A- 2014 068 767    JP-A- 2014 068 767
JP-A- 2015 214 344    JP-B1- 5 639 322

**Description**

TECHNICAL FIELD

This invention relates to a multilayer vessel, and in particular to a multilayer vessel for medical packaging (medical multilayer vessel), and a method for manufacturing the medical multilayer vessel.

BACKGROUND ART

Glass vessels in the forms of ampule, vial and prefilled syringe have been used for storing chemicals filled therein in a sealed manner. These glass vessels, however, suffer from that they generate a fine vitreous substance called "flakes", and that they easily fractures upon impact caused by dropping or the like. Another disadvantage of the glass vessels is that the vessels *per se* are heavy due to a relatively large specific gravity of glass.

In contrast, plastic is lighter than glass, and some of them even excels in impact resistance, heat resistance and transparency, depending on their materials. Plastic vessels have therefore been investigated as a substitute for the glass vessels. For example, Patent Literature 1 discloses a medical vessel made of a polyester resin. Also cycloolefin polymer (occasionally be referred to as "COP", hereinafter) has widely been used as a substitute for glass materials in the field of medical vessel, by virtue of its high impact resistance, heat resistance and transparency.

Many of the plastic vessels are, however, inferior to the glass vessels in terms of gas barrier performance, which is desired to be improved. With the aim of improving the gas barrier performance of plastic vessels, there has been investigated a multilayer vessel having a gas barrier layer as an intermediate layer. For example, Patent Literature 2 discloses a prefilled syringe whose innermost layer and outermost layer are made of a polyolefin resin, and whose intermediate layer is made of a resin with a high barrier performance.

Polymetaxylylene adipamide (occasionally be referred to as "N-MXD6", hereinafter) has been known as a thermoplastic resin with a high oxygen barrier performance (Patent Literatures 3 to 6). N-MXD6, however, very quickly crystallizes at 250 to 320°C, which is a temperature range for heat forming of the polyolefin resin such as COP. Hence, in some case when forming a multilayer vessel that uses N-MXD6 for the gas barrier layer and uses COP for the innermost layer and the outermost layer, the N-MXD6 layer would cause breakage, non-uniform thickness or blushing, resulting in degraded performances such as gas barrier performance and transparency, or deformation. It would also cause blushing after heat sterilization, damaging the transparency.

Known methods for suppressing N-MXD6 from causing blushing includes a method of adding a specific metal salt of aliphatic acid as a blushing inhibitor, and a method of adding a specific diamide compound or a diester compound. These methods for suppressing blushing with the aid of additives are known to be effective for a single-layered film which is brought into direct contact with water, or for an application associated with stretching, such as a multilayer stretched bottle with a layer structure of PET/N-MXD6/PET using polyethylene terephthalate (occasionally be referred to as "PET", hereinafter) . However, as for a multilayer vessel with a layer structure of COP/N-MXD6/COP, an effect of suppressing blushing after heat sterilization is not satisfactory. Other known methods include a method of adding a nucleation agent for crystallization to N-MXD6; and a method of blending a crystalline polyamide resin such as nylon 6, which acts as a nucleation agent for crystallization, with N-MXD6 in the process of heat sterilization. Again with these methods, obtainable is only an unsatisfactory effect of suppressing blushing after heat sterilization, for the multilayer vessel with a layer structure of COP/N-MXD6/COP.

CITATION LIST

PATENT LITERATURE

[Patent Literature 1] JP-A-08-127641
[Patent Literature 2] JP-A-2004-229750
[Patent Literature 3] JP-A-2012-201412
[Patent Literature 4] JP-A-2012-30556
[Patent Literature 5] JP-A-2014-69829
[Patent Literature 6] JP-A-2014-68767

SUMMARY OF THE INVENTION

TECHNICAL PROBLEM

This invention is aimed at solving the above-described problems, and is to provide a medical multilayer vessel with gas barrier performance and transparency suitable enough for medical packaging materials which are subject to heat sterilization.

SOLUTION TO PROBLEM

The present inventors have extensively studied the medical multilayer vessel which excels both in gas barrier performance and transparency after heat sterilization, and found that excellent gas barrier performance and transparency could be achieved even after heat sterilization, by using a specific polyamide resin composition for the gas barrier layer. The finding led us to complete this invention.

That is, the present invention relates to a medical multilayer vessel. Specifically, the present invention relates to the following <1>, preferably <2>~<12>.

<1> A medical multilayer vessel comprising a layer (X) containing, as a major ingredient, a water vapor barrier polymer that contains at least one species or more of polyolefin resin(s), and a gas barrier layer (Y) composed of a polyamide resin composition (P),
the polyamide resin composition (P) comprising:

10 to 45% by mass of polyamide resin (A) that contains a diamine unit with a content of a structural unit derived from xylylenediamine of 70 mol% or more, and a dicarboxylic acid unit with a content of a structural unit derived from a straight-chain aliphatic dicarboxylic acid having 6 to 18 carbon atoms of 70 mol% or more; and,
90 to 55% by mass of a poly(hexamethylene isophthalamide)/poly(hexamethylene terephthalamide) copolymer (B).

<2> The medical multilayer vessel of <1>, wherein the polyolefin resin is at least one or more species selected from the group consisting of cycloolefin polymer, cycloolefin copolymer and polypropylenes.
<3> The medical multilayer vessel of <1>, wherein the polyolefin resin is at least one or more species selected from the group consisting of cycloolefin polymer and cycloolefin copolymer.
<4> The medical multilayer vessel of any one of <1> to <3>, wherein the xylylenediamine is metaxylylenediamine, paraxylylenediamine or a mixture of them, and the straight-chain aliphatic dicarboxylic acid is adipic acid, sebacic acid or a mixture of them.
<5> The medical multilayer vessel of any one of <1> to <4>, wherein the dicarboxylic acid unit of the polyamide resin (A) contains a structural unit derived from aromatic dicarboxylic acid, and, the molar ratio of the structural unit derived from straight-chain aliphatic dicarboxylic acid and the structural unit derived from aromatic dicarboxylic acid (straight-chain aliphatic dicarboxylic acid/aromatic dicarboxylic acid) is 80/20 to 99/1.
<6> The medical multilayer vessel of <5>, wherein the aromatic dicarboxylic acid contains isophthalic acid.
<7> The medical multilayer vessel of any one of <1> to <3>, wherein the polyamide resin (A) contains: a diamine unit with a content of a structural unit derived from metaxylylenediamine of 90 mol% or more; and a dicarboxylic acid unit with a content of an adipic acid-derived structural unit of 90 to 100 mol% and with a content of an isophthalic acid-derived structural unit of 10 to 0 mol%.
<8> The medical multilayer vessel of any one of <1> to <7>, having the layer (X) as each of an inner layer and an outer layer, and having at least one gas barrier layer (Y) as an intermediate layer.
<9> The medical multilayer vessel of any one of <1> to <8>, wherein the gas barrier layer (Y) has a thickness that accounts for 2 to 40% of the total thickness of the multilayer vessel.
<10> The medical multilayer vessel of any one of <1> to <9>, being an ampule, vial, vacuum blood collecting tube or prefilled syringe.
<11> The medical multilayer vessel of any one of <1> to <10>, being an injection blow molded article.
<12> A method for manufacturing a medical multilayer vessel, comprising forming the medical multilayer vessel described in any one of <1> to <10> by injection blow molding.

ADVANTAGEOUS EFFECTS OF INVENTION

The medical multilayer vessel of this invention has gas barrier performance and transparency suitable enough for medical packaging materials which are subject to heat sterilization. The medical multilayer vessel can therefore store the content for a long period, allows the content to be seen through even after heat sterilization, and can be a substitute for glass vessels, with an improved convenience for customers.

DESCRIPTION OF EMBODIMENTS

This invention will be detailed below. Note that all numerical ranges given in this specification, using "to" preceded and succeeded by numerals, are used to represent the ranges including these numerals respectively as the lower and upper limit values.

The medical multilayer vessel of this invention (occasionally be referred to as "the multilayer vessel of this invention", hereinafter) has at least: a layer containing, as a major ingredient, a water vapor barrier polymer that contains at least one species or more of polyolefin resin(s), which is more preferably a layer (occasionally be referred to as "water vapor barrier layer", hereinafter) (X) containing, as a major ingredient, a water vapor barrier polymer that contains at least one or more species selected from the group consisting of cycloolefin polymer, cycloolefin copolymer (occasionally be abbreviated as "COC", hereinafter), and polypropylenes (occasionally be abbreviated as "PP", hereinafter); and a gas barrier layer (Y).

The layer structure of the multilayer vessel of this invention is not specifically limited. There are no special limitations on the number and types of the water vapor barrier layer (X) (may simply be referred to as "layer (X)", hereinafter) and the gas barrier layer (Y) (may simply be referred to as "layer (Y)", hereinafter).

The medical multilayer vessel of this invention may be composed of at least 3 layers, more preferably 3 to 10 layers, and more preferably 3 to 5 layers.

The number of layers (X) in the medical multilayer vessel of this invention is preferably 1 to 5, and more preferably 2 to 4. The number of layers (Y) in the multilayer vessel is preferably 1 to 3, and more preferably 1 or 2.

An exemplary structure may be an X/Y structure of or an Y/X structure, composed of a single layer (X) and a single layer (Y); or a three-layered structure X/Y/X composed of two layers (X) and a single layer (Y). The multilayer vessel of this invention may have therein the layer (X) and the layer (Y) brought into direct contact, or may have an optional layer such as an adhesive layer (AD) composed of an adhesive thermoplastic resin. The multilayer vessel of this invention preferably has a three-layered structure of water vapor barrier layer (X) /gas barrier layer (Y)/water vapor barrier layer (X) arranged in this order from the inner layer towards the outer layer; or a five-layered structure of water vapor barrier layer (X)/adhesive layer (AD)/gas barrier layer (Y)/adhesive layer (AD) /water vapor barrier layer (X) arranged in this order from the inner layer towards the outer layer. Besides them, a variety of thermoplastic resin layers may further be stacked depending on needs.

The multilayer vessel of this invention preferably has the layers (X) for the inner layer and the outer layer, and has the layer (Y) for at least one of the intermediate layer (s) (X/Y/X structure).

The inner layer in this context means a layer which resides on the inner side of the layer (Y) which is one intermediate layer out of layers composing the multilayer vessel, and, the outer layer means a layer which resides on the outer side of the layer (Y) which is one intermediate layer out of layers composing the multilayer vessel. The inner layer and the outer layer may be the innermost layer and the outermost layer, respectively, or there may be additional innermost layer and outermost layer. In this invention, at least the innermost layer is the layer (X).

1. Water Vapor Barrier Layer (X)

The water vapor barrier layer (X) that composes the multilayer vessel of this invention is a layer containing, as a major ingredient, a water vapor barrier polymer that contains at least one species or more of polyolefin resin(s), and is more preferably a layer containing, as a major ingredient, a water vapor barrier polymer that contains at least one or more species selected from the group consisting of COP, COC and PP.

Now, the phrase stating "containing, as a major ingredient," means that the content of the polyolefin resin (water vapor barrier polymer) in the layer (X) is 70% by mass or more, preferably 80% by mass or more, more preferably 90 to 100% by mass, and even more preferably 95 to 100% by mass. The layer (X) may contain only one species of polyolefin resin, or may contain two or more species. When two or more species of polyolefin resins are contained, the total content falls within the above described ranges.

Besides the water vapor barrier polymer, the layer (X) may contain additive(s) such as antioxidant, matting agent, weathering stabilizer, UV absorber, crystal nucleating agent, plasticizer, flame retardant and antistatic agent, depending on desired performances without damaging the effects of this invention. The multilayer vessel of this invention may have two or more layers (X), and such two or more layers may have the same composition or different composition.

The water vapor barrier layer (X) preferably has a thickness of, but not limited to, 20 to 2000 $\mu$m from the viewpoint of strength and cost, which is more preferably 50 to 1500 $\mu$m. If there are two or more layers (X), the thickness in this context is given by the total thickness.

It is particularly preferable in this invention that the layer (X) that resides at the innermost of the medical multilayer vessel, out of all water vapor barrier layers (X), has a minimum thickness of 50 $\mu$m or above, more preferably 80 $\mu$m or above, even more preferably 100 $\mu$m or above, and yet more preferably 150 $\mu$m or above. The layer (X) which resides at the innermost preferably has a maximum thickness of 400 $\mu$m or below, more preferably 350 $\mu$m or below, even more preferably 300 $\mu$m or below, and yet more preferably 250 $\mu$m or below.

Meanwhile, the layer (X) that resides at the outermost of the medical multilayer vessel, out of all water vapor barrier layers (X), has a maximum thickness of 100 $\mu$m or above, more preferably 400 $\mu$m or above, and even more preferably 500 $\mu$m or above. The layer (X) which resides at the outermost preferably has a maximum thickness of 1000 $\mu$m or below, more preferably 800 $\mu$m or below, and even more preferably 700 $\mu$m or below.

The ratio of the thickness of the layers (X) which reside at the outermost and the innermost of the medical multilayer vessel (innermost layer (X) : outermost layer (X)) is preferably 1.0:2.0 to 1.0:4.0, and more preferably 1.0:2.5 to 1.0:3.5.

The water vapor barrier polymer is the best material since the chemical properties such as heat resistance and light stability, and chemical resistance are features derived from polyolefin resin; meanwhile the physical properties such as mechanical characteristics, melting, fluidity, and dimensional accuracy are features derived from amorphous resin.

Polyolefin Resin

The polyolefin resin used in this invention is not specifically limited, for which any of known polyolefin resins are employable. The polyolefin resin is specifically exemplified by those described in paragraphs [0101] to [0103] of JP-A-2014-068767, the contents of which are incorporated into this specification.

The polyolefin resin is preferably COP, COC or polypropylenes (PP). COP and COC are preferable since they have chemical properties such as heat resistance and light stability, are chemical resistance expectable from polyolefin resin; and has physical properties such as mechanical characteristics, melting, fluidity, and dimensional accuracy expectable from amorphous resin. Meanwhile, PP is preferable from the viewpoint of oil resistance.

1-1. Cycloolefin Polymer (COP)

COP is a polymer obtained typically by ring-opening polymerization of norbornene, followed by hydrogenation. COP is described for example in JP-A-H05-317411, and commercially available as ZEONEX (registered trademark) or ZEONOR (registered trademark) from ZEON Corporation, and as Daikyo Resin CZ (registered trademark) from Daikyo Seiko Ltd.

1-2. Cycloolefin Copolymer (COC)

COC is typically a copolymer originated from olefins such as norbornene and ethylene; or a copolymer originated from olefins such as tetracyclododecene and ethylene. COC is commercially available as APEL (registered trademark) from Mitsui Chemicals, Inc.

1-3. Polypropylenes

For PP, any of known polymers such as propylene homopolymer, propylene-ethylene block copolymer, and propylene-ethylene random copolymer are employable. PP is commercially available, for example, as Bormed RB845MO from Borealis AG.

2. Gas Barrier Layer (Y)

The gas barrier layer (Y) that composes the multilayer vessel of this invention acts to block oxygen from entering the vessel from the outside, and to prevent the content of vessel from degrading through oxidation. From the viewpoint of good gas barrier performance, the gas barrier layer (Y) preferably has an oxygen transmission coefficient in an environment at 23°C with 60% relative humidity (RH) of 1.0 mL·mm/(m$^2$·day· atm) or smaller, and more preferably 0.05 to 0.8 mL·mm/(m$^2$· day·atm). The oxygen transmission coefficient may be measured in accordance with ASTM D3985, typically by using "OX-TRAN (registered trademark) 2/61" (from Mocon Inc.).

The multilayer vessel of this invention may have two or more gas barrier layers (Y), and such two or more gas barrier layers (Y) may have the same structure or different structures. The thickness of the gas barrier layer (Y) is preferably, but not specifically limited to, 1 to 800 $\mu$m from the viewpoint of gas barrier performance and transparency, and is more preferably 100 to 700 $\mu$m. If there are two or more layers (Y), the thickness of the layer (Y) in this context is given by the total thickness.

The thickness of the gas barrier layer (Y) in the multilayer vessel of this invention preferably falls within the range from 2 to 40% relative to the total thickness of the multilayer vessel, from the viewpoint of gas barrier performance and transparency, which is more preferably 5 to 38%, and even more preferably 10 to 35%. The thickness of the gas barrier layer (Y) in the multilayer vessel may be measured after cutting the vessel, and separating it from the water vapor barrier layer (X).

The ratio of the thickness of the gas barrier layer (Y), and the layer (X) which resides at the innermost of the multilayer vessel of this invention (layer (Y) :innermost layer (X)) is preferably 0.5:1.5 to 1.5:0.5, and more preferably 0.8:1.2 to 1.2:0.8. The ratio of the thickness of the gas barrier layer (Y), and the layer (X) which resides at the outermost of the multilayer vessel of this invention (layer (Y) : outermost layer (X)) is preferably 1.0:2.0 to 1.0:4.0, and more preferably 1.0:2.5 to 1.0:3.5.

3. Polyamide Resin Composition (P)

The gas barrier layer (Y) composing the multilayer vessel of this invention is made of a polyamide resin composition (P) . The polyamide resin composition (P) contains 10 to 45% by mass of polyamide resin (A) that contains a diamine unit with a content of a structural unit derived from xylylenediamine of 70 mol% or more, and a dicarboxylic acid unit with a content of a structural unit derived from a straight-chain aliphatic dicarboxylic acid having 6 to 18 carbon atoms of 70 mol% or more; and, 90 to 55% by mass of a poly(hexamethylene isophthalamide)/poly(hexamethylene terephthalamide) copolymer (B) (occasionally be abbreviated as "N-6I/6T", and also occasionally be referred to as polyamide resin (B)).

3-1. Polyamide Resin (A)

The polyamide resin (A) is a xylylene group-containing polyamide, containing a diamine unit with a content of a structural unit derived from xylylenediamine of 70 mol% or more, and a dicarboxylic acid unit with a content of a structural unit derived from a straight-chain aliphatic dicarboxylic acid having 6 to 18 carbon atoms of 70 mol% or more.

<Diamine Unit>

The diamine unit of the polyamide resin (A) contains 70 mol% or more of the structural unit derived from xylylenediamine . The content of the structural unit derived from xylylenediamine in the diamine unit of the polyamide resin (A) is preferably 80 to 100 mol%, more preferably 90 to 100 mol%, and even more preferably 95 to 100 mol%.

Xylylenediamine is preferably metaxylylenediamine, paraxylylenediamine, or mixture of them, and more preferably metaxylylenediamine, or mixture of metaxylylenediamine and paraxylylenediamine. From the viewpoint of achieving an excellent gas barrier performance, the content of the structural unit derived from metaxylylenediamine in the diamine unit of the polyamide resin (A) is preferably 70 mol% or more, more preferably 80 to 100 mol%, even more preferably 90 to 100 mol%, and yet more preferably 95 to 100 mol%.

Diamine compounds capable of composing the diamine unit besides xylylenediamine are exemplified by, but not limited to, aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethyl-hexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and aromatic ring-containing diamines such as bis(4-aminophenyl) ether, paraphenylenediamine, and bis(aminomethyl)naphthalene,.

<Dicarboxylic Acid Unit>

The dicarboxylic acid unit of the polyamide resin (A) contains 70 mol% or more of the structural unit derived from straight-chain aliphatic dicarboxylic acid having 6 to 18 carbon atoms. The content of the structural unit derived from straight-chain aliphatic dicarboxylic acid having 6 to 18 carbon atoms, in the dicarboxylic acid unit of the polyamide resin (A), is preferably 80 mol% to 100 mol%, more preferably 90 mol% to 100 mol%, and even more preferably 90 mol% to 97 mol%.

The straight-chain aliphatic dicarboxylic acid having 6 to 18 carbon atoms is preferably $\alpha,\omega$-straight-chain aliphatic dicarboxylic acid having 6 to 18 carbon atoms, and is exemplified by adipic acid, pimelic acid, suberic acid, azelaic acid, sebacic acid, 1,10-decanedicarboxylic acid, 1,11-undecanedicarboxylic acid, and 1,12-dodecanedicarboxylic acid. Among them, at least one species selected from adipic acid and sebacic acid is preferable from the viewpoint of achieving an excellent oxygen barrier performance, where adipic acid is more preferable. They may be used independently, or two or more species may be used in combination.

Dicarboxylic acid components other than the straight-chain aliphatic dicarboxylic acid having 6 to 18 carbon atoms are exemplified by, but not limited to, aliphatic dicarboxylic acids such as oxalic acid, malonic acid, succinic acid and glutaric acid; and aromatic dicarboxylic acids such as terephthalic acid, isophthalic acid and 2,6-naphthalenedicarboxylic acid. They may be used independently, or two or more species may be used in combination.

From the viewpoint of transparency of the medical multilayer vessel particularly after heat sterilization, the dicarboxylic acid unit of the polyamide resin (A) preferably contains the structural unit derived from straight-chain aliphatic dicarboxylic acid having 6 to 18 carbon atoms and the structural unit derived from aromatic dicarboxylic acid. The aromatic dicarboxylic acid is preferably one species selected from isophthalic acid and 2, 6-naphthalenedicarboxylic acid, wherein isophthalic acid is more preferable.

When assuming the dicarboxylic acid unit of the polyamide resin (A) as 100 mol% in total, the molar ratio of the structural unit derived from straight-chain aliphatic dicarboxylic acid having 6 to 18 carbon atoms and the aromatic dicarboxylic acid-derived structural unit (straight-chain aliphatic dicarboxylic acid/aromatic dicarboxylic acid) is preferably 80/20 to 99/1, more preferably 85/15 to 98/2, and even more preferably 90/10 to 97/3.

In particular, the polyamide resin (A) in this invention preferably contains the diamine unit with a content of a structural unit derived from metaxylylenediamine of 90 mol% or more; and the dicarboxylic acid unit with a content of an adipic acid-derived structural unit of 90 to 100 mol%, and with a content of an isophthalic acid-derived structural unit of 10 to 0 mol%; and more preferably contains the diamine unit with a content of a structural unit derived from metaxylylenediamine of 95 mol% or more; and the dicarboxylic acid unit with a content of an adipic acid-derived structural unit of 90 to 97 mol%, and with a content of an isophthalic acid-derived structural unit of 10 to 3 mol%.

The polyamide resin (A) used in this invention, which is composed of the diamine unit and the dicarboxylic acid unit, can also contain some other moiety, such as a structural unit other than the diamine unit and dicarboxylic acid unit, or a terminal group. Such other structural unit is exemplified by, but not limited to, lactams such as ε-caprolactam, valerolactam, laurolactam and undecalactam; and aminocarboxylic acid-derived structural unit such as 11-aminoundecanoic acid and 12-aminododecanoic acid. The polyamide resin (A) can also contain trace components such as additives used for the synthesis. In the polyamide resin (A) used in this invention, the diamine unit or the dicarboxylic acid unit typically account for 95% by mass or more, and preferably 98% by mass or more.

<Preparation of Polyamide Resin (A) >

The polyamide resin (A) may be prepared by a method and under polymerization conditions which are freely selected without special limitation. For example, the polyamide resin (A) may be prepared by heating a salt composed of a diamine component and a dicarboxylic acid component under pressure in the presence of water, and by allowing melt-polymerization to proceed while removing the added water and released water. The polyamide resin (A) may be prepared alternatively by adding the diamine component directly to the dicarboxylic acid component kept in a molten state, and by subjecting the mixture to polycondensation under normal pressure. In order to keep the reaction system with a uniform liquid condition, the polycondensation in this case is allowed to proceed by continuously adding the diamine component to the dicarboxylic acid component, while heating the reaction system so that the reaction temperature would not fall below the melting points of the oligoamide and polyamide produced therein. During the polycondensation, a small amount of monoamine or monocarboxylic acid may be added as a molecular weight modifier.

The polyamide resin (A) is preferably a product obtained by polycondensation based on melt polymerization, followed by solid phase polymerization. According to an exemplary method of melt polycondensation, a nylon salt composed of a diamine component and a dicarboxylic acid component is heated under pressure in the presence of water, and the melt is subjected to melt polymerization while eliminating the added water and released water. According to another exemplary method, the diamine component may be added directly to the dicarboxylic acid component kept in a molten state, and the melt is subjected to polycondensation. In order to keep the reaction system with a uniform liquid condition, the polycondensation in this case is allowed to proceed by continuously adding the diamine component to the dicarboxylic acid component, while heating the reaction system so that the reaction temperature would not fall below the melting points of the oligoamide and polyamide produced therein.

The solid phase polymerization is carried out preferably after the polymer, obtained in the melt polycondensation, is taken out. As a heating apparatus used for the solid phase polymerization, a batch type heating apparatus that excels in air tightness and can substantially isolate the polyamide resin from oxygen is preferred over a continuous type heating apparatus. In particular, heating apparatuses with a rotary drum, such as tumble drier, conical drier and rotary drier; and a conical heating apparatus with an internal rotary blade, called Nauta mixer, are suitably used, but not limited thereto.

In order to avoid mutual adhesion of polyamide resin pellets or to avoid adhesion of the polyamide resin pellets to the inner wall of apparatus, the solid phase polymerization of polyamide resin is preferably carried out according to: a first step of raising crystallinity of the polyamide resin; a second step of increasing the molecular weight of the polyamide resin; and a third step of cooling the polyamide resin after the solid phase polymerization was allowed to proceed to reach a desired molecular weight. The first step is preferably carried out at a temperature not higher than the glass transition temperature of the polyamide resin. The second step is preferably carried out under reduced pressure, and at a temperature lower than the melting point of the polyamide resin, but not limited thereto.

<Physical Properties of Polyamide Resin (A)>

Relative viscosity is widely used as an index of the degree of polymerization of the polyamide resin. The relative viscosity of the polyamide resin (A) used in this invention is preferably 2.2 to 4.0 from the viewpoint of melt viscosity of the water vapor barrier layer (X) and moldability in co-extrusion molding, which is more preferably 2.3 to 3.5, and even more preferably 2.4 to 3.0. Method of measuring the relative viscosity follows a method described later in EXAMPLES.

The polyamide resin (A) preferably has a melting point of 200 to 250°C from the viewpoint of moldability or workability, which is more preferably 210 to 245°C, and even more preferably 220 to 240°C.

3-2. Polyamide Resin (B)

The polyamide resin (B) is a poly(hexamethylene isophthalamide)/poly(hexamethylene terephthalamide) copolymer, and is obtained by polycondensation of terephthalic acid, isophthalic acid, and hexamethylenediamine. The polyamide resin (B) is an amorphous polyamide resin, and acts to reduce crystallization rate of the polyamide resin (A) in the polyamide resin composition (P), to thereby improve the moldability. N-6I/6T may be a block copolymer or may be a random copolymer. N-6I/6T may be any of commercially available products which include "Novamid (registered trademark) X21" (from DSM Japan Engineering Plastics, Inc.), "Selar (registered trademark) PA 3426" (from Du Pont-Mitsui Polychemicals Co., Ltd.), and "Grivory (registered trademark) G21" (from EMS-CHEMIE Japan Ltd.).

N-6I/6T may contain some other moiety, such as a structural unit other than the structural units derived from terephthalic acid, isophthalic acid and hexamethylenediamine, or a terminal group, without departing from the spirit of this invention. Such other structural unit is exemplified by, but not limited to, lactams such as ε-caprolactam, valerolactam, laurolactam and undecalactam; and aminocarboxylic acid-derived structural units such as 11-aminoundecanoic acid and 12-aminododecanoic acid. N-6I/6T used in this invention can also contain trace components such as additives used for the synthesis. In N-6I/6T used in this invention, the structural units derived from terephthalic acid, isophthalic acid and hexamethylenediamine typically account for 95% by mass or more, more preferably 98% by mass or more, and even more preferably 99% by mass or more.

The content of the polyamide resin (A) and polyamide resin (B) in the polyamide resin composition (P), given in the form of (A) : (B), is 10 to 45% by mass: 90 to 55% by mass, preferably 15 to 40% by mass:85 to 60% by mass, even more preferably 20 to 40% by mass:80 to 60% by mass, yet more preferably 20 to 35% by mass:80 to 65% by mass, and furthermore preferably 25 to 35% by mass:75 to 65% by mass. With the content of the polyamide resin (B) of less than 55% by mass, an effect of delaying crystallization of the polyamide resin (A) will be insufficient, resulting in nonconformities such as blow failure or blushing during injection blow molding due to crystallization. Meanwhile, with the content of the polyamide resin (B) exceeding 90% by mass, heat moldability will be improved, whereas the gas barrier performance will unfortunately degrade. Although it might be preferable, from the viewpoint of improving the oxygen barrier performance, to control the ratio of the polyamide resin (A) above 45% by mass, this invention succeeded in achieving a composition with all-round performance of the medical multilayer vessel, by intentionally employing the above-described ratio of (A) and (B) .

In the polyamide resin composition (P) of this invention, the total content of the polyamide resin (A) and the polyamide resin (B) preferably accounts for 80% by mass or more, more preferably 90% by mass or more, even more preferably 95% by mass or more, and yet more preferably 99% by mass or more.

Only one species, or two or more species of each of the polyamide resin (A) and the polyamide resin (B) may be contained. When two or more species are contained, the total content preferably falls within the above-described ranges.

Although the polyamide resin composition (P) in this invention may contain some polyamide resin other than the polyamide resin (A) and the polyamide resin (B), it preferably contains substantially no polyamide resin other than the polyamide resin (A) and the polyamide resin (B). Now the phrase stating "contains substantially no ..." means that the content is 3% by mass or less of the polyamide resin composition (P), which is preferably 1% by mass or less.

3-3. Additive

The polyamide resin composition (P) may contain freely-selectable additive(s) such as thermoplastic resin besides the polyamide resin, lubricant, matting agent, heat stabilizer, weathering stabilizer, UV absorber, crystal nucleating agent, plasticizer, flame retardant, antistatic agent, anti-coloring agent and antigelling agent, without damaging the effects of this invention.

3-4. Preparation of Polyamide Resin Composition (P)

The polyamide resin composition (P) may be prepared by employing a freely selectable method of mixing and/or kneading, to thereby mix and/or knead the polyamide resin (A) and the polyamide resin (B). When they are mixed, polyamide resin pellets may be fed into a rotary hollow vessel, or may be fed by predetermined portions through a volumetric feeder into a hopper. The method of kneading is exemplified by melt kneading. It is particularly preferable to blend predetermined amounts of polyamide resin (A) and polyamide resin (B) according to a dry process, and then feeding the mixture all at one into the hopper, to prepare the polyamide resin composition (P). For the case where any additive is blended to the polyamide resin composition, the additive is added to the polyamide resin (A) and/or the polyamide resin (B) before they are mixed and/or kneaded, or may be added at the same time when the polyamide resin (A) and the polyamide resin (B) are mixed and/or kneaded.

4. Optional Layer

The multilayer vessel of this invention may include, besides the layers (X) and (Y), an optional layer depending on desired performances. The optional layer is exemplified by an adhesive layer.

<Adhesive Layer (AD)>

When it fails to obtain a practical level of interlayer adhesion strength between two adjacent layers, it is preferable to provide an adhesive layer between the two layers. The adhesive layer preferably contains a thermoplastic resin with an adhesive property. Such adhesive thermoplastic resin is exemplified by acid-modified polyolefin resins obtained by modifying a polyolefin resin such as polyethylene, polypropylene or the like with an unsaturated carboxylic acid such as acrylic acid, methacrylic acid, maleic acid, maleic anhydride, fumaric acid, itaconic acid or the like; and polyester-based thermoplastic elastomer that contains a polyester-based block copolymer as a major ingredient. The adhesive layer preferably uses a resin obtained by modifying a resin equivalent to the water vapor barrier polymer used as the layer (X), from the viewpoint of adhesiveness. The adhesive layer is preferably 2 to 100 $\mu$m thick, from the viewpoint of balancing a practical level of adhesion strength and moldability or workability, which is more preferably 5 to 90 $\mu$m thick, and even more preferably 10 to 80 $\mu$m thick.

5. Medical Multilayer Vessel and Method for Manufacturing the Same

The medical multilayer vessel of this invention preferably has an oxygen transmission rate (OTR) of 0.00100 mL/(0.21 atm·day·package) or below, more preferably 0.00090 mL/(0.21 atm·day·package) or below, and even more preferably 0.00070 mL/(0.21 atm·day·package) or below. The lower limit value of oxygen transmission rate is typically, but not specified to, 0.00040 mL/ (0.21 atm·day·package) or above, and more preferably 0.00045 mL/(0.21 atm·day·package) or above. Even a level of 0.00050 mL/(0.21 atm·day·package) or above is practical enough.

The medical multilayer vessel of this invention preferably has a water vapor barrier performance (WVTR) of 0.0010 g/ (day-package) or below, more preferably 0.0008 g/ (day· package) or below, and even more preferably 0.0007 g/(day· package) or below. The lower limit value of the water vapor barrier performance is typically, but not specified to, 0.0005 g/(day·package) or above. Even a level of 0.0006 g/(day· package) or above is practical enough.

The medical multilayer vessel of this invention, when assumed to be 300 $\mu$m thick and treated at 121°C for 30 minutes, preferably has a haze of 10.0% or below, which is more preferably 7.0% or below, even more preferably 5.0% or below, and yet more preferably 4.0% or below. The lower limit value of haze is preferably, but not specified to, 1.0% or above, and more preferably 2.5% or above. Even a level of 3.0% or above is practical enough.

The medical multilayer vessel of this invention, when assumed to be 300 $\mu$m thick and treated at 121°C for 30 minutes, preferably has a total light transmittance of 70% or above, which is more preferably 80% or above, and even more preferably 85% or above. The lower limit value of haze is typically, but not specified to, 95% or below. Even a level of 93% or below is practical enough.

OTR and WVTR, as well as, haze and total light transmittance after heat sterilization are measured according to methods described later in EXAMPLES.

The medical multilayer vessel of this invention preferably has a total thickness of 100 to 3000 $\mu$m, more preferably 500 to 2000 $\mu$m, and even more preferably 810 to 1200 $\mu$m.

In particular in this invention, it is preferable to use the layer (X) that contains, as a major ingredient, the water vapor barrier polymer that contains at least one or more species selected from the group consisting of cycloolefin polymer and cycloolefin copolymer, for the innermost layer of the medical multilayer vessel. With such constitution, the medical multilayer vessel will advantageously have less adhesion of the content to be stored on the inner surface thereof, and will cause less elution from the inner surface thereof. In particular for the case of medical vessel that contains drug or so, adhesion of an active ingredient to the inner surface of vessel, or elution from the inner surface would adversely affect drug potency. In contrast, with the constitution of this invention, the above-described problem is effectively avoidable.

The medical multilayer vessel of this invention is preferably manufactured by injection molding or injection blow molding, wherein the injection blow molding is more preferable . According to the injection blow molding, the obtainable multilayer vessel will be less deformable even after sterilization under high pressure steam, will be suppressed from blushing effectively, and will keep a high level of barrier performance. According to the injection blow molding, first a test tube-like preform (parison) is formed by injection molding, the preform that is kept suitably heated is then inserted into dies with a final shape (blow molding dies), then expanded to be fit in the dies using air blown therein through an inlet, and then cooled to solidify into the form of bottle.

The preform may be formed by a well-known injection molding method. For example, by using an injection molding machine having two or more injection units and injection molding dies, a material for composing the water vapor barrier layer (X) and a material for composing the gas barrier layer (Y) are injected from respective injection cylinders through a hot runner into a die cavity, to thereby manufacture a multilayer preform conforming to the shape of the injection dies.

Alternatively, a three-layered X/Y/X multilayer preform may be manufactured by first injecting the material for composing the water vapor barrier layer (X) from an injection cylinder, then injecting the material for composing the gas barrier layer (Y) from another injection cylinder, at the same time with the material for composing the water vapor barrier layer (X), and then injecting a necessary amount of the material for composing the water vapor barrier layer (X) to fill the cavity. Still alternatively, a five-layered X/Y/X/Y/X multilayer preform may be manufactured by first injecting the material for composing the water vapor barrier layer (X), then injecting only the material for composing the gas barrier layer (Y), and then finally injecting a necessary amount of the material for composing the water vapor barrier layer (X) to fill the cavity.

The above-described dies with a final shape is heated to preferably 120 to 170°C, more preferably 130 to 160°C. During blow molding, the outer surface of molded article is kept in contact with the inner surface of the dies for a predetermined duration.

As another method for manufacturing a blow-molded article, employable is a two-stage blow molding process according to which the above-described multilayer preform is blown in primary stretch blow dies to obtain a primary blow-molded article larger than the final blow-molded article, the primary blow-molded article is then allowed to shrink under heating, and again blown in secondary dies to obtain a final blow-molded article. According to this method for manufacturing a blow-molded article, the obtainable blow-molded article will have a fully stretched and thinned bottom, and will have high deformation and impact resistance during hot filling and heat sterilization.

The multilayer vessel of this invention may be coated with an evaporated film of inorganic substance or inorganic oxide, or with an amorphous carbon film. The inorganic substance or inorganic oxide is exemplified by aluminum, alumina and silicon oxide. The evaporated film of the inorganic substance or inorganic oxide can block eluates such as acetaldehyde and formaldehyde from the multilayer vessel of this invention. Method of forming the evaporated film is exemplified by, but not specifically limited to, physical vapor deposition methods including vacuum evaporation, sputtering and ion plating; and chemical vapor deposition methods including PECVD (plasma CVD, plasma-enhanced chemical vapor deposition). The evaporated film is preferably 5 to 500 nm thick from the viewpoint of gas barrier performance, light shielding property and flex resistance, which is more preferably 5 to 200 nm thick. The amorphous carbon film is a diamond-like carbon film, which is a hard carbon film also referred to as i-carbon film or hydrogenated amorphous carbon film. An exemplary method for forming the film is such as evacuating a hollow molded article to vacuum, feeding therein a carbon source gas, and applying a plasma generating energy to form a plasma from the carbon source gas. In this way, the amorphous carbon film may be formed over the inner surface of vessel. The amorphous carbon film is capable of not only blocking transmission of low molecular inorganic gas such as oxygen and carbon dioxide to a considerable degree, but of also preventing sorption of various odorous low molecular organic compounds. The amorphous carbon film is preferably 50 to 5000 nm thick, in consideration of an effect of suppressing sorption of low molecular organic compounds, an effect of improving the gas barrier performance, adhesiveness to plastics, durability and transparency.

The medical multilayer vessel of this invention is particularly suitable for ampule, vial, vacuum blood collecting tube or prefilled syringe (preferably, a barrel (outer cylinder) of prefilled syringe).

For details of the ampule, vial, vacuum blood collecting tube and prefilled syringe, descriptions in paragraphs [0074] to [0080] of JP-A-2015-048097 may be referred to, the contents of which are incorporated into this specification.

Substance to be stored in the medical multilayer vessel of this invention is exemplified by, but not specifically limited to, vitamins such as vitamin A, vitamin B2, vitamin B12, vitamin C, vitamin D, vitamin E and vitamin K; alkaloids such as atropine; hormones such as adrenalin and insulin; saccharides such as glucose and maltose; antibiotics such as ceftriaxone, cephalosporin and cyclosporin; benzodiazepine-based drugs such as oxazolam, flunitrazepam, clotiazepam and clobazam; and freely-selectable natural products and compounds.

Methods of heat sterilization of the medical multilayer vessel of this invention include those based on steam system, hot water reservoir system and shower system. Sterilization temperature preferably falls within the range from 80°C to 140°C, and sterilization time preferably falls within the range from 10 to 120 minutes.

The medical multilayer vessel of this invention may alternatively subjected to electromagnetic sterilization using ultraviolet radiation, microwave and gamma ray; gas treatment typically using ethylene oxide; or chemical sterilization using hydrogen peroxide, hypochlorous acid and so forth.

EXAMPLES

This invention will further be detailed below, referring to Examples. This invention is, however, not limited to these Examples. Various methods of measurement in these Examples are as follows.

(1) Relative Viscosity

Precisely weighed was 0 . 2 g of a polyamide resin, the resin was then dissolved into 20 mL of a 96% by mass aqueous sulfuric acid solution at 20 to 30°C under stirring. After thorough dissolution of the polyamide resin, 5 mL of the solution was immediately sampled in a viscometer, allowed to stand in a thermostat chamber at 25°C for 10 minutes, and falling time (t) was measured. Also falling time (t0) of a 96% by mass aqueous sulfuric acid solution as a blank was measured in the same way. Relative viscosity was calculated from t and t0, according to the equation below. The viscosity was measured using a Cannon-Fenske viscometer.

$$\text{Relative Viscosity} = t/t0$$

(2) Oxygen Barrier Performance of Multilayer Vessel (OTR)

Oxygen transmission rate (OTR) of the multilayer vessel was measured at 23°C, under a relative humidity inside the medical multilayer vessel of 100%, and a relative humidity outside the medical multilayer vessel of 50%, in accordance with ASTM D3985 using an oxygen transmission rate measuring instrument. The smaller the measured value, the better the oxygen barrier property. The oxygen transmission rate measuring instrument employed has a model name of "OX-TRAN (registered trademark) 2/61", from Mocon Inc.

(3) Water Vapor Barrier Performance (WVTR) of Medical Multilayer Vessel

On the 10th day from the start of measurement, water vapor transmission rate (WVTR) of the medical multilayer vessel was measured at 40°C, in an atmosphere with a relative humidity of 100%. For the measurement, a water vapor transmission rate measuring instrument with the model name of "PERMATRAN-W (registered trademark) 3/33G" from Mocon Inc. was used. The smaller the measured value, the better the water vapor barrier performance.

(4) Transparency of Multilayer Vessel after Heat Sterilization (Haze and Total Light Transmittance)

The multilayer vessel was heat-sterilized (retort-sterilized) in an autoclave at 121°C for 30 minutes, and the thus sterilized medical multilayer vessel was sampled by cutting the side wall thereof for measurement of haze and total light transmittance. The haze was measured in accordance with JIS K7136, and the total light transmittance was measured in accordance with JIS K7375. The above-described time for heat sterilization includes neither heating (temperature elevation) time nor cooling time. The thickness was measured at the spot of measurements, and used for converting the measured results into values expectable from a vessel of 300 $\mu$m thick.

The autoclave employed here was Model "SR-240" from Tomy Seiko Co., Ltd. The measuring instrument employed here was a color and turbidity measuring instrument under the model name of "COH-300A" from Nippon Denshoku Industries Co., Ltd.

(5) Oil Resistance Test of Multilayer Vessel

Ten milliliters each of an oil (100% medium-chain triglyceride with aliphatic fatty acid residues having 8 to 12 carbon atoms) was poured in the multilayer vessels, and stored at 40°C for 6 months. The multilayer vessels whose appearances were kept unchanged were marked with "o", and those found to cause oil leakage were marked with "×". The oil employed here was Nisshin MCT.

Example 1

Predetermined amounts of N-MXD6 (under the trade name of "MX-Nylon S6007" from Mitsubishi Gas Chemical Company, relative viscosity =2.65, as polyamide resin (A1)) composed of metaxylylenediamine unit and adipic acid unit, and N-6I/6T (under the trade name of "Novamid (registered trademark) X21" from DSM Japan Engineering Plastics, Inc., as polyamide resin (B1)) were fed into a single screw extruder, kneaded, and pelletized. Polyamide resin composition (P1) composed of 30% by mass of polyamide resin (A1) and 70% by mass of polyamide resin (B1), was thus prepared.

Next, a three-layered multilayer preform (21.5 g) with an (X)/(Y)/(X) structure was obtained according to conditions below, by injecting a material for composing the layer (X) from an injection cylinder, next by injecting a material for composing the layer (Y) from another injection cylinder, at the same time with the material for composing the layer (X), and then by injecting a necessary amount of the material for composing the layer (X) to fill the cavity. A resin employed for composing the layer (X) was a cycloolefin polymer (under the trade name of "ZEONEX (registered trademark) 690R" from ZEON Corporation). A resin employed for composing the layer (Y) was the polyamide resin composition (P1) described above. The thus obtained preform was cooled to a predetermined temperature, and then transferred to blow forming dies for blow molding that is carried out as the secondary process. A multilayer vial was thus manufactured.

(Geometry of Multilayer Vial)

The multilayer vial was 45 mm long, 24 mm in outer diameter and 1.0 mm thick, with an outer water vapor barrier layer (X) of 600 $\mu$m thick, a gas barrier layer (Y) of 200 $\mu$m thick, and the inner water vapor barrier layer (X) of 200 $\mu$m thick. The multilayer vial was manufactured using an injection blow integrated molding machine (Model "ASB12N/10T" from Nissei ASB Machine Co., Ltd., four-cavity type).

(Vial molding Conditions)

| | |
|---|---|
| Cylinder temperature for layer (X): | 300°C |
| Cylinder temperature for layer (Y): | 280°C |
| Resin channel temperature within injection molding dies: | 300°C |
| Blow temperature: | 150°C |
| Temperature of cooling water for blow molding dies: | 40°C |

Example 2

In a 3-L jacketed reactor equipped with a stirrer, a partial condenser, a cooler, a dropping tank, and a nitrogen gas feeding tube, 4.70 mol of adipic acid (AA) and 0.30 mol of isophthalic acid (IPA) (from A.G. International Chemical Co., Inc.) were placed after precisely weighed, the reactor was thoroughly replaced with nitrogen gas, and the content was allowed to melt at 160°C under stirring while feeding a small amount of nitrogen gas, to prepare a slurry. To the slurry kept under stirring, 4.97 mol of metaxylylenediamine (MXDA) was added dropwise over 160 minutes. During the process, the inner temperature was continuously elevated up to 250°C. Water released as a result of the dropwise addition of metaxylylenediamine was removed out from the system, through the partial condenser and the cooler. After completion of the dropwise addition of metaxylylenediamine, the inner temperature was elevated up to 260°C, and the reaction was allowed to continue for one hour. The obtained polymer was taken out in the form of strands through a nozzle at the bottom of the reactor, cooled in water, and chopped into pellets. Polyamide resin pellets with a molar ratio of adipic acid and isophthalic acid of 94:6 was thus obtained.

The pellets were then fed into a heating device with a stainless steel rotary drum, which was then rotated at 5 rpm. After thorough replacement with nitrogen gas, the reaction system was further heated from room temperature up to 140°C under a small amount of nitrogen gas flow. When the temperature in the reaction system reached 140°C, the system was then evacuated down to 1 Torr or below, and the temperature in the system was further elevated to 190°C over 130 minutes. After the temperature in the system reached 190°C, the solid phase polymerization was allowed to continue at that temperature for 30 minutes. Upon completion of the reaction, the evacuation was stopped, the temperature in the system was lowered under a nitrogen gas flow, and upon reaching 60°C, the pellets were taken out, to obtain polyamide resin (A2). Polyamide resin (A2) was found to have a relative viscosity of 2.68.

Polyamide resin composition (P2) was prepared in the same way as in Example 1, except that polyamide resin (A2) was used in place of polyamide resin (A1). A multilayer vial was manufactured in the same way as in Example 1, except that polyamide resin composition (P2) was used in place of polyamide resin composition (P1).

Example 3

Polyamide resin composition (P3) composed of 40% by mass of polyamide resin (A2) and 60% by mass of polyamide resin (B1) was prepared, by altering the ratio of blending of polyamide resin (A2) and polyamide resin (B1) in Example 2, followed by kneading and pelletizing. A multilayer vial was manufactured in the same way as in Example 1, except that polyamide resin composition (P3) was used in place of polyamide resin composition (P1).

Example 4

Polyamide resin composition (P4) composed of 15% by mass of polyamide resin (A2) and 85% by mass of polyamide resin (B1) was prepared, by altering the ratio of blending of polyamide resin (A2) and polyamide resin (B1) in Example 2, followed by kneading and pelletizing. A multilayer vial was manufactured in the same way as in Example 1, except that polyamide resin composition (P4) was used in place of polyamide resin composition (P1).

Examples 5 to 8

Multilayer vials were manufactured in the same way respectively as in Examples 1 to 4, except that cycloolefin copolymer (under the trade name of "TOPAS (registered trademark) 6013S-04", from TOPAS Advanced Polymers GmbH) was used in place of cycloolefin polymer (under the trade name of "ZEONEX (registered trademark) 690R", from ZEON Corporation), as a resin for composing the layer (X).

Examples 9 to 12

Multilayer vials were manufactured in the same way respectively as in Examples 1 to 4, except that polypropylene (under the trade name of "Bormed RB845MO", from Borealis AG) was used in place of cycloolefin polymer (under the trade name of "ZEONEX (registered trademark) 690R", from ZEON Corporation), as a resin for composing the layer (X).

Comparative Example 1

A multilayer vial was manufactured in the same way as in Example 1, except that polyamide resin (B1) was used in place of polyamide resin composition (P1).

Comparative Example 2

A multilayer vial was manufactured in the same way as in Example 1, except that polyamide resin (A1) was used in place of polyamide resin composition (P1).

Comparative Example 3

A multilayer vial was manufactured in the same way as in Example 1, except that polyamide resin (A2) was used in place of polyamide resin composition (P1).

Comparative Example 4

Polyamide resin composition (P5) composed of 70% by mass of polyamide resin (A1) and 30% by mass of polyamide resin (B1) was prepared, by altering the ratio of blending of polyamide resin (A1) and polyamide resin (B1) in Example 1, followed by kneading and pelletizing. A multilayer vial was manufactured in the same way as in Example 1, except that polyamide resin composition (P5) was used in place of polyamide resin composition (P1).

Comparative Example 5

Polyamide resin composition (P6) composed of 70% by mass of polyamide resin (A2) and 30% by mass of polyamide resin (B1) was prepared, by altering the ratio of blending of polyamide resin (A2) and polyamide resin (B1) in Example 2, followed by kneading and pelletizing. A multilayer vial was manufactured in the same way as in Example 1, except that polyamide resin composition (P6) was used in place of polyamide resin composition (P1).

Comparative Example 6

Polyamide resin composition (P7) composed of 90% by mass of polyamide resin (A1) and 10% by mass of polyamide resin (B2) was prepared, by using nylon 6 (under the trade name of "UBE-Nylon", grade 1015B, from Ube Industries, Ltd.) as polyamide resin (B2), in place of polyamide resin (B1), and feeding predetermined amounts of polyamide resin (A1) and polyamide resin (B2) into a single screw extruder, followed by kneading and pelletizing. A multilayer vial was manufactured in the same way as in Example 1, except that polyamide resin composition (P7) was used in place of polyamide resin composition (P1).

Comparative Example 7

A multilayer vial layer (X) was manufactured in the same way as in Example 1, except that polycarbonate (under the trade name of "lupilon (registered trademark) S3000", from Mitsubishi Engineering Plastics Corporation) was used in place of cycloolefin polymer (under the trade name of "ZEONEX (registered trademark) 690R", from ZEON Corporation), as a resin for composing the layer (X).

The multilayer vials obtained in Examples 1 to 12 and Comparative Examples 1 to 7 were measured regarding the oxygen transmission rate and the water vapor transmission rate according to the methods described above. The multilayer vials obtained in Examples 1 to 8 and Comparative Examples 1 to 7 were heat-sterilized, and the post-treatment haze and total light transmittance were measured. The multilayer vessels obtained in Examples 9 to 12 were heat-sterilized, and the post-treatment total light transmittance was measured. The multilayer vials obtained in Examples 9 to 12 and Comparative Examples 1 to 7 were also subjected to the oil resistance test according to the method described above. Results are summarized in Tables 1 to 3.

[Table 1]

| Example | | | 1 | 2 | 3 | 4 | 5 | 6 | 7 | 8 |
|---|---|---|---|---|---|---|---|---|---|---|
| Inner layer and Outer layer(X) | | | COP | COP | COP | COP | COC | COC | COC | COC |
| Gas Barrier Layer (Y) | Polyamide Resin(A) | Diamine Unit — Metaxylylenediamine (mol%) ※1 | 100 | 100 | 100 | 100 | 100 | 100 | 100 | 100 |
| | | Dicarboxylic Acid Unit — Adipic Acid (mol%) ※2 | 100 | 94 | 94 | 94 | 100 | 94 | 94 | 94 |
| | | Isophthalic Acid (mol%) ※2 | 0 | 6 | 6 | 6 | 0 | 6 | 6 | 6 |
| | Polyamide Resin(B) | | N-6I/6T | N-6I/6T | N-6I/6T | N-6I/6T | N-6I/6T | N-6I/6T | N-6I/6T | N-6I/6T |
| | Content of Polyamide Resin (A):(B)(Mass Ratio) | | 30:70 | 30:70 | 40:60 | 15:85 | 30:70 | 30:70 | 40:60 | 15:85 |
| Haze after treated at 121°C for 30 minutes (%) | | | 6.2 | 3.8 | 3.9 | 3.3 | 6.1 | 3.7 | 3.7 | 3.0 |
| Total light transmittance after treated at 121°C for 30 minutes (%) | | | 86.3 | 89.1 | 89.3 | 89.9 | 87.2 | 89.3 | 89.4 | 90.1 |
| OTR(mL/(0.21atm·day·package)) | | | 0.00058 | 0.00051 | 0.00048 | 0.00072 | 0.00062 | 0.00054 | 0.00058 | 0.00086 |
| WVTR(g/(day·package)) | | | 0.0006 | 0.0006 | 0.0006 | 0.0006 | 0.0007 | 0.0007 | 0.0007 | 0.0007 |

※1 : mol% in diamine unit (same will apply to Tables below)

※2 : mol% in dicarboxylic acid unit (same will apply to Tables below) COP: cycloolefin polymer (same will apply to Tables below) COC: cycloolefin copolymer (same will apply to Tables below) PP: polypropylene (same will apply to Tables below) N-6I/6T: poly(hexamethylene isophthalamide)/poly(hexamethylene terephthalamide) copolymer (same will apply to Tables below)

[Table 2]

| Example | | | | 9 | 10 | 11 | 12 |
|---|---|---|---|---|---|---|---|
| Inner layer and Outer layer(X) | | | | PP | PP | PP | PP |
| Gas Barrier Layer (Y) | Polyamide Resin (A) | Diamine Unit | Metaxylylenediamine (mol%) ※1 | 100 | 100 | 100 | 100 |
| | | Dicarboxylic Acid Unit | Adipic Acid (mol%) ※2 | 100 | 94 | 94 | 94 |
| | | | Isophthalic Acid (mol%) ※2 | 0 | 6 | 6 | 6 |
| | Polyamide Resin(B) | | | N-6I/6T | N-6I/6T | N-6I/6T | N-6I/6T |
| | Content of Polyamide Resin (A):(B)(Mass Ratio) | | | 30:70 | 30:70 | 40:60 | 15:85 |
| Total light transmittance after treated at 121° C for 30 minutes (%) | | | | 75.3 | 76.2 | 75.2 | 75.3 |
| OTR(mL/ (0.21atm· day· package)) | | | | 0.00067 | 0.00065 | 0.00062 | 0.00094 |
| WVTR(g/(day·package)) | | | | 0.0008 | 0.0008 | 0.0008 | 0.0008 |
| Oil Resistance Test | | | | ○ | ○ | ○ | ○ |

[Table 3]

| Example | | | | 1 | 2 | 3 | 4 | 5 | 6 | 7 |
|---|---|---|---|---|---|---|---|---|---|---|
| Inner layer and Outer layer(X) | | | | COP | COP | COP | COP | COP | COP | PC |
| Gas Barrier Layer (Y) | Polyamide Resin (A) | Diamine Unit | Metaxylylenediamine (mol%) ※1 | - | 100 | 100 | 100 | 100 | 100 | 100 |
| | | Dicarboxylic Acid Unit | Adipic Acid (mol%) ※2 | | 100 | 94 | 100 | 94 | 100 | |
| | | | Isophthalic Acid (mol%) ※2 | - | 0 | 6 | 0 | 6 | 0 | 1000 |
| | Polyamide Resin(B) | | | N-6I/6T | - | - | N-6I/6T | N-6I/6T | Ny6 | N-6I/6T |
| | Content of Polyamide Resin (A):(B)(Mass Ratio) | | | 0:100 | 100:0 | 100:0 | 70:30 | 70:30 | 90:10 | 30:70 |
| Haze after treated at 121° C for 30 minutes (%) | | | | 5.7 | 92.1 | 87.2 | 76.8 | 76.8 | 89.5 | 6.2 |
| Total light transmittance after treated at 121° C for 30 minutes (%) | | | | 89.9 | 56.8 | 60.2 | 68.1 | 68.1 | 54.3 | 86.3 |
| OTR(mL/(0.21atm·day·package)) | | | | 0.0022 | 0.00031 | 0.00032 | 0.00041 | 0.00039 | 0.00033 | 0.00067 |
| WVTR(g/(day·package)) | | | | 0.0006 | 0.0006 | 0.0006 | 0.0006 | 0.0006 | 0.0006 | 0.0124 |
| Oil Resistance Test | | | | × | × | × | × | × | × | × |
| Ny6: nylon 6 PC: polycarbonate | | | | | | | | | | |

In Comparative Example 1 where xylylene group-containing polyamide (polyamide resin (A)) was not used, the vessel was found to have high oxygen transmission rate and poor gas barrier performance. In Comparative Examples 2 and 3 where N-6I/6T (polyamide resin (B)) was not used, the vessels caused blushing after heat sterilization, showing poor transparency. This is supposedly because the N-MXD6 slowly crystallized during the heat sterilization at 121°C, and grown up into a large spherulite.

Also in Comparative Example 6 where nylon 6, which is a crystalline polyamide, was blended in place of N-6I/6T, the vessel was found to cause blushing after heat sterilization, showing poor transparency. The crystalline polyamide resin has been known to act as a crystal nucleating agent for N-MXD6 during the heat sterilization, and to micronize the spherulite size of N-MXD6, thereby suppressing the blushing during the heat sterilization. This effect was, however, found to be insufficient for suppressing the blushing of the multilayer vessel of this invention after heat sterilization.

In Comparative Examples 4 and 5 where the content of the polyamide resin (B) was less than 55% by mass, an effect of delaying crystallization of the polyamide resin (A) was found to be insufficient, and the vessel was found to cause blushing due to crystallization, showing poor transparency.

In Comparative Example 7 where PC was used for the layer (X), the vessel was found to be considerably inferior in water vapor barrier performance.

In contrast, the multilayer vessels of Examples 1 to 8 were found to excel in water vapor barrier performance and transparency even after heat sterilization. In particular, the vessels of Examples 2 to 4 and 6 to 8, where the polyamide resin (A) that contains the aromatic dicarboxylic acid unit was used, were successful to reduce the haze after heat sterilization to a considerable degree.

It was also found that the multilayer vessels of Examples 9 to 12 were excel in water vapor barrier performance and oil resistance.

INDUSTRIAL APPLICABILITY

The multilayer vessel of this invention has water vapor barrier performance and transparency suitable enough for medical packaging materials which are subject to heat sterilization. The multilayer vessel can therefore store the content for a long period, allows the content to be seen through even after heat sterilization, and can be a substitute for glass vessels, with an improved convenience for customers.

**Claims**

1. A medical multilayer vessel comprising a layer (X) containing, as a major ingredient, a water vapor barrier polymer that contains at least one species or more of polyolefin resin(s), and a gas barrier layer (Y) composed of a polyamide resin composition (P),
   the polyamide resin composition (P) comprising:

   10 to 45% by mass of polyamide resin (A) that contains a diamine unit with a content of a structural unit derived from xylylenediamine of 70 mol% or more, and a dicarboxylic acid unit with a content of a structural unit derived from a straight-chain aliphatic dicarboxylic acid having 6 to 18 carbon atoms of 70 mol% or more; and,
   90 to 55% by mass of a poly(hexamethylene isophthalamide)/poly(hexamethylene terephthalamide) copolymer (B).

2. The medical multilayer vessel of Claim 1, wherein the polyolefin resin is at least one or more species selected from the group consisting of cycloolefin polymer, cycloolefin copolymer and polypropylenes.

3. The medical multilayer vessel of Claim 1, wherein the polyolefin resin is at least one or more species selected from the group consisting of cycloolefin polymer and cycloolefin copolymer.

4. The medical multilayer vessel of any one of Claims 1 to 3, wherein the xylylenediamine is metaxylylenediamine, paraxylylenediamine or a mixture of them, and the straight-chain aliphatic dicarboxylic acid is adipic acid, sebacic acid or a mixture of them.

5. The medical multilayer vessel of any one of Claims 1 to 4, wherein the dicarboxylic acid unit of the polyamide resin (A) contains a structural unit derived from aromatic dicarboxylic acid, and, the molar ratio of the structural unit derived from straight-chain aliphatic dicarboxylic acid and the structural unit derived from aromatic dicarboxylic acid (straight-chain aliphatic dicarboxylic acid/aromatic dicarboxylic acid) is 80/20 to 99/1.

6. The medical multilayer vessel of Claim 5, wherein the aromatic dicarboxylic acid contains isophthalic acid.

7. The medical multilayer vessel of any one of Claims 1 to 3, wherein the polyamide resin (A) contains: a diamine unit with a content of a structural unit derived from metaxylylenediamine of 90 mol% or more; and a dicarboxylic acid unit with a content of an adipic acid-derived structural unit of 90 to 100 mol% and with a content of an isophthalic acid-derived structural unit of 10 to 0 mol%.

8. The medical multilayer vessel of any one of Claims 1 to 7, having the layer (X) as each of an inner layer and an outer layer, and having at least one gas barrier layer (Y) as an intermediate layer.

9. The medical multilayer vessel of any one of Claims 1 to 8, wherein the gas barrier layer (Y) has a thickness that accounts for 2 to 40% of the total thickness of the multilayer vessel.

10. The medical multilayer vessel of any one of Claims 1 to 9, being an ampule, vial, vacuum blood collecting tube or prefilled syringe.

11. The medical multilayer vessel of any one of Claims 1 to 10, being an injection blow molded article.

12. A method for manufacturing a medical multilayer vessel, comprising forming the medical multilayer vessel described in any one of Claims 1 to 10 by injection blow molding.


**Patentansprüche**

1. Medizinisches mehrschichtiges Gefäß, umfassend eine Schicht (X), die als Hauptbestandteil ein Wasserdampfbarrierepolymer enthält, das mindestens eine oder mehrere Spezies von Polyolefinharz(en) enthält, und eine Gasbarriereschicht (Y), die aus einer Polyamidharzzusammensetzung (P) zusammengesetzt ist, wobei die Polyamidharzzusammensetzung (P) umfasst:

    10 bis 45 Massen-% eines Polyamidharzes (A), das eine Diamineinheit mit einem Gehalt von 70 Mol-% oder mehr einer von Xylylendiamin abgeleiteten Struktureinheit und eine Dicarbonsäureeinheit mit einem Gehalt von 70 Mol-% oder mehr einer von einer geradkettigen aliphatischen Dicarbonsäure mit 6 bis 18 Kohlenstoffatomen abgeleiteten Struktureinheit enthält; und
    90 bis 55 Massen-% eines Poly(hexamethylenisophthalamid)/Poly(hexamethylenterephthalamid)-Copolymers (B).

2. Medizinisches mehrschichtiges Gefäß gemäß Anspruch 1, wobei es sich bei dem Polyolefinharz um mindestens eine oder mehrere Spezies, ausgewählt aus der Gruppe bestehend aus Cycloolefinpolymer, Cycloolefincopolymer und Polypropylenen, handelt.

3. Medizinisches mehrschichtiges Gefäß gemäß Anspruch 1, wobei es sich bei dem Polyolefinharz um mindestens eine oder mehrere Spezies, ausgewählt aus der Gruppe bestehend aus Cycloolefinpolymer und Cycloolefincopolymer, handelt.

4. Medizinisches mehrschichtiges Gefäß gemäß mindestens einem der Ansprüche 1 bis 3, wobei das Xylylendiamin meta-Xylylendiamin, para-Xylylendiamin oder eine Mischung davon ist und die geradkettige aliphatische Dicarbonsäure Adipinsäure, Sebazinsäure oder eine Mischung davon ist.

5. Medizinisches mehrschichtiges Gefäß gemäß mindestens einem der Ansprüche 1 bis 4, wobei die Dicarbonsäureeinheit des Polyamidharzes (A) eine von einer aromatischen Dicarbonsäure abgeleiteten Struktureinheit enthält, und das Molverhältnis der von der geradkettigen aliphatischen Dicarbonsäure abgeleiteten Struktureinheit und der von der aromatischen Dicarbonsäure abgeleiteten Struktureinheit (geradkettige aliphatische Dicarbonsäure/aromatische Dicarbonsäure) 80/20 bis 99/1 beträgt.

6. Medizinisches mehrschichtiges Gefäß gemäß Anspruch 5, wobei die aromatische Dicarbonsäure Isophthalsäure enthält.

7. Medizinisches mehrschichtiges Gefäß gemäß mindestens einem der Ansprüche 1 bis 3, wobei das Polyamidharz (A) enthält: eine Diamineinheit mit einem Gehalt von 90 Mol-% oder mehr einer von meta-Xylylendiamin abgeleiteten Struktureinheit; und eine Dicarbonsäureeinheit mit einem Gehalt von 90 bis 100 Mol-% einer von Adipinsäure abgeleiteten Struktureinheit und mit einem Gehalt von 10 bis 0 Mol-% einer von Isophthalsäure abgeleiteten Struktureinheit.

8. Medizinisches mehrschichtiges Gefäß gemäß mindestens einem der Ansprüche 1 bis 7, welches die Schicht (X) jeweils als Innenschicht und Außenschicht aufweist und mindestens eine Gasbarriereschicht (Y) als Zwischenschicht aufweist.

9. Medizinisches mehrschichtiges Gefäß gemäß mindestens einem der Ansprüche 1 bis 8, wobei die Gasbarriereschicht (Y) eine Dicke aufweist, die 2 bis 40% der Gesamtdicke des mehrschichtigen Gefäßes ausmacht.

10. Medizinisches mehrschichtiges Gefäß gemäß mindestens einem der Ansprüche 1 bis 9, welches eine Ampulle, ein Fläschchen, ein Vakuum-Blutabnahmeschlauch oder eine vorgefüllte Spritze ist.

11. Medizinisches mehrschichtiges Gefäß gemäß mindestens einem der Ansprüche 1 bis 10, welches ein spritzgeblasener Formgegenstand ist.

12. Verfahren zur Herstellung eines medizinischen mehrschichtigen Gefäßes, umfassend das Bilden des in mindestens einem der Ansprüche 1 bis 10 beschriebenen medizinischen mehrschichtigen Gefäßes durch Spritzblasformen.

## Revendications

1. Récipient médical multicouche comprenant une couche (X) contenant, en tant qu'ingrédient principal, un polymère de barrière à la vapeur d'eau qui contient au moins une ou plusieurs espèce(s) de résine(s) de polyoléfine, et une couche de barrière au gaz (Y) composée d'une composition de résine de polyamide (P), la composition de résine de polyamide (P) comprenant :

   10 à 45 % en masse d'une résine de polyamide (A) qui contient une unité de diamine contenant 70 % en mole ou plus d'une unité constituante dérivée de xylylènediamine, et une unité d'acide dicarboxylique contenant 70 % en mole ou plus d'une unité constituante dérivée d'un acide dicarboxylique aliphatique à chaîne droite présentant 6 à 18 atomes de carbone ; et
   90 à 55 % en masse d'un copolymère de poly(hexaméthylène isophtalamide)/poly(hexaméthylène téréphtalamide) (B)

2. Récipient médical multicouche selon la revendication 1, dans lequel la résine de polyoléfine est au moins une ou plusieurs espèces choisies dans le groupe consistant en un polymère de cyclooléfine, en un copolymère de cyclooléfine et en un polypropylène.

3. Récipient médical multicouche selon la revendication 1, dans lequel la résine de polyoléfine est au moins une ou plusieurs espèces choisies dans le groupe consistant en un polymère de cyclooléfine et en un copolymère de cyclooléfine.

4. Récipient médical multicouche selon l'une quelconque des revendications 1 à 3, dans lequel la xylylènediamine est de la métaxylylènediamine, de la paraxylylènediamine ou un mélange de celles-ci, et l'acide dicarboxylique aliphatique à chaîne droite est de l'acide adipique, de l'acide sébacique ou un mélange de ceux-ci.

5. Récipient médical multicouche selon l'une quelconque des revendications 1 à 4, dans lequel l'unité d'acide dicarboxylique de la résine de polyamide (A) contient une unité constituante dérivée d'acide dicarboxylique aromatique, et le rapport molaire de l'unité constituante dérivée d'acide dicarboxylique aliphatique à chaîne droite et l'unité constituante dérivée d'acide dicarboxylique aromatique (acide dicarboxylique aliphatique à chaîne droite/acide dicarboxylique aromatique) est de 80/20 à 99/1.

6. Récipient médical multicouche selon la revendication 5, dans lequel l'acide dicarboxylique aromatique contient de l'acide isophtalique.

7. Récipient médical multicouche selon l'une quelconque des revendications 1 à 3, dans lequel la résine de polyamide (A) contient : une unité de diamine contenant 90 % en mole ou plus d'une unité constituante dérivée de métaxylylènediamine ; et une unité d'acide dicarboxylique contenant 90 à 100 % en mole d'une unité constituante dérivée d'acide adipique et contenant 10 à 0 % en mole d'une unité constituante dérivée d'acide isophtalique.

8. Récipient médical multicouche selon l'une quelconque des revendications 1 à 7, présentant la couche (X) en tant que chacune d'une couche interne et d'une couche externe, et présentant au moins une couche de barrière aux gaz (Y) en tant que couche intermédiaire.

9. Récipient médical multicouche selon l'une quelconque des revendications 1 à 8, dans lequel la couche de barrière aux gaz (Y) présente une épaisseur qui représente 2 à 40 % de l'épaisseur totale du récipient multicouche.

10. Récipient médical multicouche selon l'une quelconque des revendications 1 à 9, étant une ampoule, un flacon, un tube de collecte de sang sous vide ou une seringue préremplie.

11. Récipient médical multicouche selon l'une quelconque des revendications 1 à 10, étant un article moulé par injection-soufflage.

12. Procédé de fabrication d'un récipient médical multicouche, comprenant la formation du récipient médical multicouche décrit dans l'une quelconque des revendications 1 à 10 par moulage par injection-soufflage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8127641 A
- JP 2004229750 A
- JP 2012201412 A
- JP 2012030556 A
- JP 2014069829 A
- JP 2014068767 A
- JP H05317411 A
- JP 2015048097 A